# EUROPEAN PATENT APPLICATION

(11) **EP 3 355 031 A1**
(43) Date of publication of application: **01.08.2018**
(21) Application number: 17190893.2
(22) Date of filing: 13.09.2017
(51) Int. Cl.: G01D 5/14, G01D 11/24

(54) **DISPLACEMENT DETECTION APPARATUS FOR LINEAR MOTION MECHANISM AND REAR WHEEL STEERING APPARATUS FOR VEHICLE INCLUDING THE SAME**

(30) Priority: 28.01.2017 JP 2017013724
(71) Applicant: AISIN SEIKI KABUSHIKI KAISHA, Kariya-shi Aichi-ken 448-8650 (JP)
(72) Inventor: MORINAGA, Shinya, Kariya-shi, Aichi-ken, 448-8650 (JP)
(74) Representative: Winter, Brandl, Fürniss, Hübner, Röss, Kaiser, Polte - Partnerschaft mbB

(57) **Abstract**

A displacement detection apparatus (5) is mounted in a linear motion mechanism (3c) having a nut member (36) and a rod (2) screw-coupled to the nut member to convert rotational motion of the nut member into rectilinear motion of the rod to detect an axial displacement of the rod using a displacement sensor (5a). The displacement detection apparatus includes: a permanent magnet (5b) disposed in parallel with the rod and to face the displacement sensor; a magnet block (50) having a holding portion (51) accommodating the permanent magnet, and a support portion (52) formed continuously and integrally with the holding portion and fixed to the rod; a casing (12) having upright wall portions (12w) parallel to an axis of the rod and accommodating the magnet block between the pair of upright wall portions; and biasing mechanisms (60) respectively interposed between the upright wall portions and the support portion.

## Description

### TECHNICAL FIELD

This disclosure relates to a displacement detection apparatus which is mounted in a linear motion mechanism that converts rotational motion of a nut member into rectilinear motion of a rod so as to detect an axial displacement of the rod. In addition, this disclosure relates to a rear wheel steering apparatus for a vehicle, which has the displacement detection apparatus and is interposed between suspension mechanisms for supporting rear wheels of a vehicle to steer the rear wheels.

### BACKGROUND DISCUSSION

As a typical linear motion mechanism, there has been known a linear motion mechanism which has a nut member and a rod screw-coupled to the nut member and converts rotational motion of the nut member into rectilinear motion of the rod, and there also has been known a displacement detection apparatus which detects an axial displacement of the rod. For example, for the purpose of "providing a displacement detection apparatus for a linear motion mechanism which may be easily mounted on a rod and serves as a mean for preventing a rotation of the rod", JP 2014-232035A (Reference 1) proposes "displacement detection apparatus for a linear motion mechanism, which is mounted in the linear motion mechanism, which has a nut member and the rod screw-coupled to the nut member to convert the rotational motion of the nut member into the rectilinear motion of the rod, and detects an axial displacement of the rod, in which the rod has a long groove which is long in an axial direction and has a through hole which is opened in the long groove, and the displacement detection apparatus includes: a synthetic-resin magnet block which has a permanent magnet disposed in parallel with the rod, a holding portion that accommodates the permanent magnet, and a pair of legs extending from both ends of the holding portion, the magnet block being formed by insert-molding a metallic nut between the pair of legs; and a displacement sensor which is disposed to face the permanent magnet, in which the pair of legs and the nut of the magnet block are disposed in the long groove of the rod, and a bolt inserted through the through hole of the rod is screw-coupled to the nut such that the magnet block is fixed to the rod" (disclosed in paragraphs [0006] and [0008] in Reference 1).

For the purpose of "providing a rear wheel steering apparatus for a vehicle, which is interposed between suspension mechanisms for supporting rear wheels of the vehicle to steer the rear wheels, in which the rear wheel steering apparatus has the displacement detection apparatus described above, is easily assembled, and enables cost-reduction", Reference 1 proposes "a rear wheel steering apparatus which is interposed between the suspension mechanisms for supporting the rear wheels of the vehicle to steer the rear wheels, the rear wheel steering apparatus including: a housing which is connected to the suspension mechanisms through a first connecting member and a second connecting member; an electric motor which is accommodated in a cylindrical body that constitutes the housing; a speed reduction mechanism which is accommodated in the cylindrical body and decelerates output of the electric motor; a linear motion mechanism which has a nut member that is connected to the speed reduction mechanism and rotated, and a rod that is coupled to the nut member by a threaded engagement and connected to the second connecting member, and converts rotational motion of the nut member into rectilinear motion of the rod; and a casing which constitutes the housing, is disposed to surround the rod extending from the cylindrical body, and is fixed to the cylindrical body, in which the rod has a long groove which is long in an axial direction, and a through hole which is opened in the long groove, and the displacement detection apparatus includes: a synthetic-resin magnet block which has a permanent magnet disposed in parallel with the rod, a holding portion for accommodating the permanent magnet, and a pair of legs extending from both ends of the holding portion, the magnet block being formed by insert-molding a metallic nut between the pair of legs, in which the pair of legs and the nut are disposed in the long groove of the rod, and a bolt inserted through the through hole of the rod is screw-coupled to the nut such that the magnet block is fixed to the rod" (disclosed in paragraphs [0007] and [0010] in Reference 1).

According to the displacement detection apparatus for the linear motion mechanism disclosed in Reference 1, "the magnet block serves to detect an axial displacement of the rod when the rod rectilinearly moves and to prevent the rotation of the rod, and is enabled to be reduced in the size and weight therefore." Furthermore, a significant effect is confirmed in that "the pair of legs and the nut are disposed in the long groove of the rod, and the magnet block is fixed to the rod, and as a result, the magnet block is securely held by the rod without being rotated about the nut" (disclosed in paragraph [0012] in Reference 1), and even in the rear wheel steering apparatus, a significant effect is recognized in that "the magnet block serves to detect the axial displacement of the rod when the rod rectilinearly moves and to prevent the rotation of the rod, and a size and a weight of the entire rear wheel steering apparatus may be reduced" (disclosed in Paragraph [0014] in Reference 1).

According to the displacement detection apparatus for the linear motion mechanism and the rear wheel steering apparatus which are disclosed in Reference 1, there is provided "the configuration in which a casing having a pair of upright wall portions parallel to an axis of the rod is provided, the holding portion of the magnet block is disposed to be held between the pair of upright wall portions, and the rod is prevented by the magnet block from being rotated with respect to the casing", and with this configuration, "the assembly process becomes easier and costs may be reduced" (disclosed in Paragraphs [0013] and [0015] in Reference 1), but it is necessary to ensure a more smooth and silent movement of the magnet block in consideration of a relationship between the magnet block and the pair of upright wall portions of the casing which holds the magnet block.

Thus, a need exists for a displacement detection apparatus for a linear motion mechanism which has a magnet block that is accommodated in a casing and serves to detect an axial displacement of the rod when the rod rectilinearly moves and to prevent a rotation of the rod, and detects the axial displacement of the rod, in which a more smooth and silent movement of the magnet block with respect to the casing may be ensured.

A need also exists for a rear wheel steering apparatus for a vehicle which is interposed between suspension mechanisms for supporting rear wheels of the vehicle to steer the rear wheels, and has the displacement detection apparatus described above so as to ensure a more smooth and silent operation.

### SUMMARY

An aspect of this disclosure is directed to a displacement detection apparatus for a linear motion mechanism having a nut member and a rod screw-coupled to the nut member to convert rotational motion of the nut member into rectilinear motion of the rod. The displacement detection apparatus is mounted in the linear motion mechanism to detect an axial displacement of the rod using a displacement sensor. The displacement detection apparatus includes: a permanent magnet which is disposed to be in parallel with the rod and to face the displacement sensor; a magnet block which has a holding portion that accommodates the permanent magnet, and a support portion formed continuously and integrally with the holding portion and fixed to the rod; a casing which has a pair of upright wall portions parallel to an axis of the rod and accommodates the magnet block between the pair of upright wall portions; and biasing mechanisms which are respectively interposed between the pair of upright wall portions that constitutes the casing and the support portion of the magnet block, and bias the pair of upright wall portions and the support portion in a direction in which intervals between the pair of upright wall portions and the support portion are widened.

In the displacement detection apparatus, it is preferable that the biasing mechanisms include: biasing members which are held on the support portion of the magnet block; and sliding members which are respectively interposed between the biasing members and the pair of upright wall portions and disposed to be in press contact with wall surfaces of the pair of upright wall portions by the biasing members.

It is preferable that the support portion of the magnet block has projections at both sides facing the pair of upright wall portions, the biasing members have disc springs fitted to the projections, respectively, the sliding members have claw portions locked by the support portion, the claw portions are locked by the support portion, and a predetermined gap is formed between the sliding member and tip surfaces of the projection at an initial position at which the sliding members are in press contact with the wall surfaces of the upright wall portions by biasing force of the disc springs.

In the displacement detection apparatus, it is preferable that the rod has a long groove which is long in an axial direction, and a mounting hole which is opened in the long groove, and the support portion of the magnet block has a through hole formed coaxially with the mounting hole of the rod, and a bolt is inserted through the through hole and screw-coupled to the mounting hole, such that the support portion is fixed to the rod.

Another aspect of this disclosure is directed to a rear wheel steering apparatus including: a housing which is connected to suspension mechanisms configured to support rear wheels of a vehicle via a first connecting member and a second connecting member; an electric motor which is accommodated in a cylindrical body that constitutes the housing; a speed reduction mechanism which is accommodated in the cylindrical body and decelerates output of the electric motor; a linear motion mechanism which has a nut member connected to the speed reduction mechanism to be rotated, and a rod that is screw-coupled to the nut member and connected to the second connecting member to convert rotational motion of the nut member into rectilinear motion of the rod; a displacement sensor which is mounted in the linear motion mechanism to detect an axial displacement of the rod; a permanent magnet which is disposed to be in parallel with the rod and to face the displacement sensor; a magnet block which has a holding portion that accommodates the permanent magnet, and a support portion formed continuously and integrally with the holding portion and fixed to the rod; a casing which constitutes the housing together with the cylindrical body, has a pair of upright wall portions parallel to an axis of the rod, and accommodates the magnet block between the pair of upright wall portions; and biasing mechanisms which are respectively interposed between the pair of upright wall portions that constitutes the casing and the support portion of the magnet block and biases the pair of upright wall portions and the support portion in a direction in which intervals between the pair of upright wall portions and the support portion are widened.

In the rear wheel steering apparatus, it is preferable that the biasing mechanisms include: biasing members which are held on the support portion of the magnet block; and sliding members which are respectively interposed between the biasing members and the pair of upright wall portions and disposed to be in press contact with wall surfaces of the pair of upright wall portions by the biasing members.

It is preferable that the support portion of the magnet block has projections at both sides facing the pair of upright wall portions, the biasing members have disc springs fitted to the projections, respectively, the sliding members have claw portions locked by the support portion, the claw portions are locked by the support portion, and a predetermined gap is formed between the sliding member and a tip surface of the projection at an initial position at which the sliding members are in press contact with the wall surfaces of the upright wall portions by biasing force of the disc springs.

In the rear wheel steering apparatus, it is preferable that the rod has a long groove which is long in an axial direction, and a mounting hole which is opened in the long groove, and the support portion of the magnet block has a through hole formed coaxially with the mounting hole of the rod, and a bolt is inserted through the through hole and screw-coupled to the mounting hole such that the support portion is fixed to the rod.

Since the aspects of this disclosure are configured as described above, the aspects of this disclosure have the following effects. That is, the displacement detection apparatus for the linear motion mechanism of this disclosure includes: a permanent magnet disposed to be in parallel with the rod and to face the displacement sensor; a magnet block which has the holding portion that accommodates the permanent magnet, and the support portion formed continuously and integrally with the holding portion and fixed to the rod; the casing which has the pair of upright wall portions parallel to the axis of the rod and accommodates the magnet block between the pair of upright wall portions; and biasing mechanisms which are respectively interposed between the pair of upright wall portions that constitutes the casing and the support portion of the magnet block and biases the pair of upright wall portions and the support portion in the direction in which the intervals between the pair of upright wall portions and the support portion are widened, and the magnet block serves to detect an axial displacement of the rod when the rod rectilinearly moves and to prevent a rotation of the rod. In particular, the support portion of the magnet block is accommodated between the pair of upright wall portions and remains biased by the biasing mechanisms in the direction in which the intervals between the pair of upright wall portions and the support portion are widened. Therefore a load, which needs to be withstood when the rod is supported to be non-rotatable with respect to the upright wall portion, concentrates on the support portion, and it is possible to prevent a large load from being applied to the holding portion, and the permanent magnet, and as a result, the magnet block, together with the rod, may be smoothly and silently moved.

In the displacement detection apparatus, the biasing mechanisms include biasing members which are held on the support portion, and sliding members which are respectively interposed between the biasing members and the pair of upright wall portions and disposed to be in press contact with the wall surfaces of the pair of upright wall portions by the biasing members, and as a result, the support portion is held between the pair of upright wall portions in a state in which the sliding members are in press contact with the wall surfaces of the upright wall portions by the biasing force of the biasing members. Therefore, the rod may be smoothly and silently operated while being reliably prevented from being rotated without generating rattling noise resulting from the rotation of the rod.

The support portion of the magnet block has the projections on the opposite sides facing the pair of upright wall portions, the biasing members have the disc springs fitted to the projections, respectively, the sliding members have the claw portions locked by the support portion, the claw portions are locked by the support portion, and predetermined gaps are formed between the sliding members and the tip surfaces of the projections at the initial position at which the sliding members are in press contact with the wall surfaces of the upright wall portions by biasing force of the disc springs, and as a result, the support portion is held between the pair of upright wall portions in a state in which the sliding members are in press contact with the wall surfaces of the upright wall portions by the biasing force of the disc springs. Thus, in a case in which force in the rotation direction, which is applied to the rod, is smaller than the biasing force of the disc spring, no displacement in the rotation direction occurs in the rod, the rod is held to be non-rotatable, and the rod is smoothly and silently moved. When the force in the rotation direction, which is applied to the rod, becomes higher than the biasing force of the disc springs, the disc springs are compressed further than at the initial position. However, when the gaps become zero, the sliding members and the support portion, and the magnet block have the same property as a rigid body, and no displacement of the rod in the rotation direction occurs any further such that the rod is smoothly and silently moved.

In the displacement detection apparatus, when the rod has a long groove which is long in the axial direction, and a mounting hole which is opened in the long groove, the support portion of the magnet block has a through hole formed coaxially with the mounting hole of the rod, and a bolt is inserted through the through hole and screw-coupled to the mounting hole such that the support portion is fixed to the rod, the displacement detection apparatus may be more easily assembled.

The rear wheel steering apparatus of this disclosure includes: a displacement sensor which is mounted in the linear motion mechanism that converts rotational motion of a nut member connected to a speed reduction mechanism for decelerating the output of the electric motor into rectilinear motion of the rod, and detects an axial displacement of the rod; a permanent magnet which is disposed to be in parallel with the rod and to face the displacement sensor; the magnet block which has the holding portion that accommodates the permanent magnet, and the support portion formed continuously and integrally with the holding portion and fixed to the rod; the casing which constitutes the housing together with the cylindrical body, has the pair of upright wall portions parallel to the axis of the rod, and accommodates the magnet block between the pair of upright wall portions; and biasing mechanisms which are respectively interposed between the pair of upright wall portions that constitutes the casing and the support portion of the magnet block and biases the pair of upright wall portions and the support portion in a direction in which the intervals between the pair of upright wall portions and the support portion are widened. Thus, the magnet block serves to detect an axial displacement of the rod when the rod rectilinearly moves and to prevent the rotation of the rod, and a size and a weight of the entire rear wheel steering apparatus may be reduced. In particular, the support portion of the magnet block is accommodated between the pair of upright wall portions and is held in the state of being biased by the biasing mechanism in the direction in which the intervals between the pair of upright wall portions and the support portion are widened. Therefore, it is possible to prevent a large load from being applied to the holding portion and hence the permanent magnet, and as a result, the magnet block, together with the rod, may be smoothly and silently moved. Further, in the rear wheel steering apparatus, an initial rear wheel steering angle when the vehicle starts up is detected in a state in which the vehicle is stopped, the magnet block is held between the pair of upright wall portions by the biasing mechanism, and there is no relative displacement between the displacement sensor and the permanent magnet, and as a result, it is possible to detect the initial rear wheel steering angle with high precision.

In the rear wheel steering apparatus, the biasing mechanisms include biasing members which are held on the support portion of the magnet block, and sliding members which are respectively interposed between the biasing members and the pair of upright wall portions and disposed to be in press contact with the wall surfaces of the pair of upright wall portions by the biasing members, and as a result, the support portion is held between the pair of upright wall portions in a state in which the sliding members are in press contact with the wall surfaces of the upright wall portions by the biasing force of the biasing members. Thus, the rod may be smoothly and silently operated while being reliably prevented from being rotated without generating rattling noise resulting from the rotation of the rod.

When the support portion of the magnet block has the projections at the opposite sides facing the pair of upright wall portions, the biasing members have disc springs fitted to the projections, respectively, the sliding members have claw portions locked by the support portion, the claw portions are locked by the support portion, and predetermined gaps are formed between the sliding members and the tip surfaces of the projections at the initial position at which the sliding members are in press contact with the wall surfaces of the upright wall portions by biasing force of the disc springs, in a case in which force in the rotation direction, which is applied to the rod, is smaller than the biasing force of the disc spring, no displacement in the rotation direction occurs in the rod, the rod is held to be non-rotatable, and the rod is smoothly and silently moved. When the force in the rotation direction, which is applied to the rod, becomes larger than the biasing force of the disc springs and the gaps become zero, the sliding member and the support portion, and the magnet block have the same property as a rigid body, and no displacement of the rod in the rotation direction occurs any further so that the rod is smoothly and silently moved. Thus, the entire rear wheel steering apparatus may be smoothly and silently operated.

In the rear wheel steering apparatus, when the rod has a long groove which is long in the axial direction, and the mounting hole which is opened in the long groove, the support portion of the magnet block has the through hole formed coaxially with the mounting hole of the rod, and the bolt is inserted through the through hole and screw-coupled to the mounting hole such that the support portion is fixed to the rod, and as a result, the rod and the magnet block in the rear wheel steering apparatus may be assembled more easily.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an exploded perspective view illustrating an embodiment of a linear motion mechanism and a displacement detection apparatus disclosed here;
Fig. 2 is a cross-sectional view illustrating a casing and the displacement detection apparatus provided in the embodiment disclosed here;
Fig. 3 is a top plan view illustrating the casing and the displacement detection apparatus provided in the embodiment disclosed here;
Fig. 4 is an exploded perspective view of a magnet block and a biasing mechanism provided in the embodiment disclosed here;
Fig. 5 is a perspective view of the magnet block and the biasing mechanism provided in the embodiment disclosed here;
Fig. 6 is a cross-sectional view illustrating an enlarged part of the biasing mechanism provided in the embodiment disclosed here;
Fig. 7 is a transverse cross-sectional view illustrating an entire configuration of a rear wheel steering apparatus according to the embodiment disclosed here; and
Fig. 8 is a transvers cross-sectional view illustrating an enlarged part of an actuator according to the embodiment disclosed here.

### DETAILED DESCRIPTION

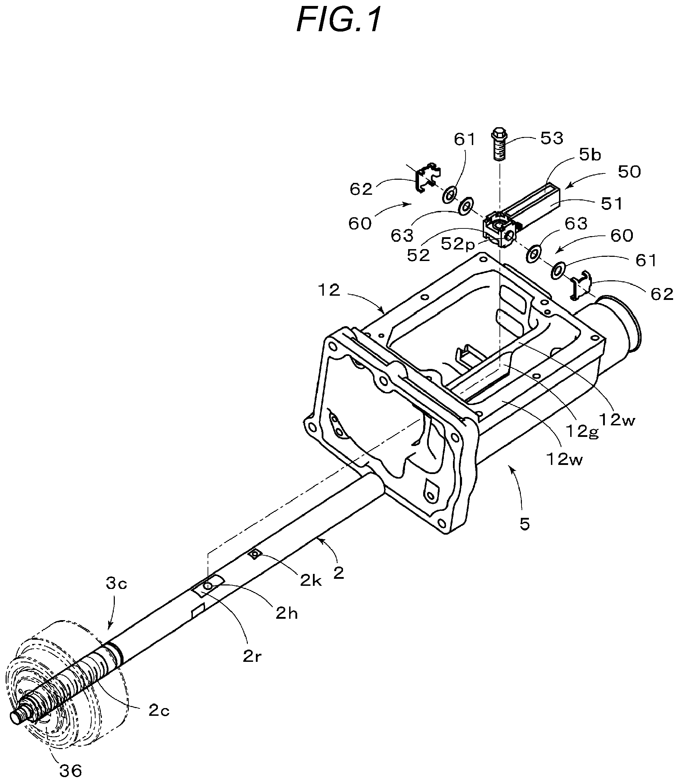

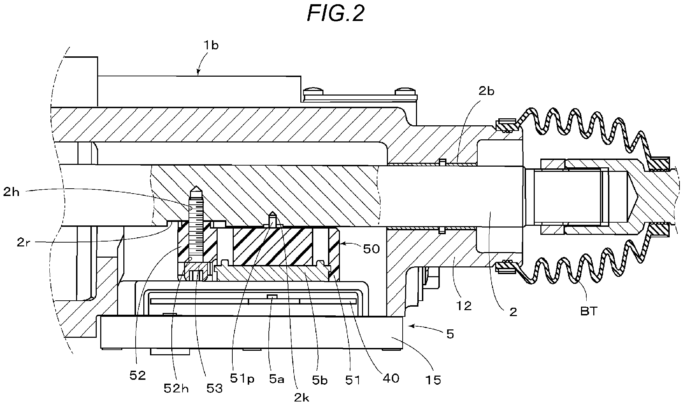

Hereinafter, an embodiment disclosed here, first, an embodiment of a linear motion mechanism and a displacement detection apparatus will be described with reference to Figs. 1 to 6. In Fig. 1, a linear motion mechanism 3c has a nut member 36 indicated by an alternate long and two short dashes line, and a rod 2 screw-coupled to the nut member 36, and converts rotational motion of the nut member 36 into rectilinear motion of the rod 2, and the linear motion mechanism 3c is also called a screw mechanism. A displacement detection apparatus 5 of the present embodiment serves to detect an axial displacement of the rod 2, and has a displacement sensor (denoted by reference numeral 5a in Fig. 2) and a permanent magnet 5b, and for example, the permanent magnet 5b is made of a neodymium magnet and is held in a magnet block 50. Further, the linear motion mechanism 3c is mounted in a rear wheel steering apparatus to be described below, and for example, the displacement sensor 5a is configured as a magnetic vector sensor, and as illustrated in Fig. 2, the displacement sensor 5a is disposed at a position facing the permanent magnet 5b.

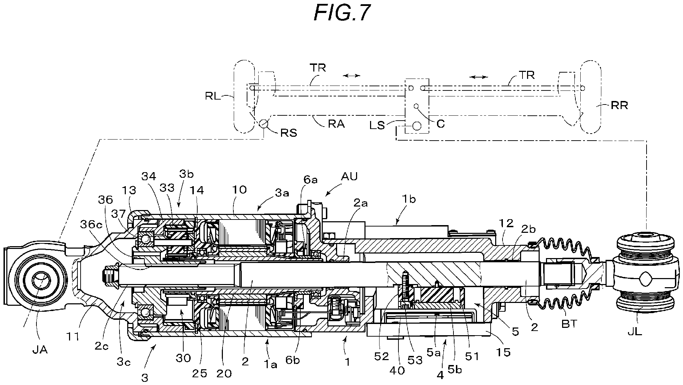

As illustrated in Figs. 1 and 2, a long groove (concave portion having a roughly rectangular shape) 2r, which is long in an axial direction, is formed in the rod 2, and a mounting hole 2h is formed to be opened in a bottom surface of the long groove 2r. In addition, a locking hole 2k is formed at a position spaced apart from the mounting hole 2h at a predetermined distance in the axial direction. The magnet block 50 is made of synthetic resin, and has a holding portion 51 which accommodates the permanent magnet 5b, and a support portion 52 which is formed continuously and integrally with the holding portion 51 and fixed to the rod 2. A through hole 52h, which is coaxial with the mounting hole 2h of the rod 2, is formed in the support portion 52, and a locking pin 51 p is inserted into the holding portion 51. Thus, the locking pin 51 p is locked in the locking hole 2k, the support portion 52 is disposed in the long groove 2r of the rod 2, and a bolt 53 is inserted through the through hole 52h and screw-coupled to the mounting hole 2h such that the support portion 52 is fixed to the rod 2, and the magnet block 50 is held in parallel with the rod 2 mounted on a casing 12 of the rear wheel steering apparatus (illustrated in Fig. 7) to be described below.

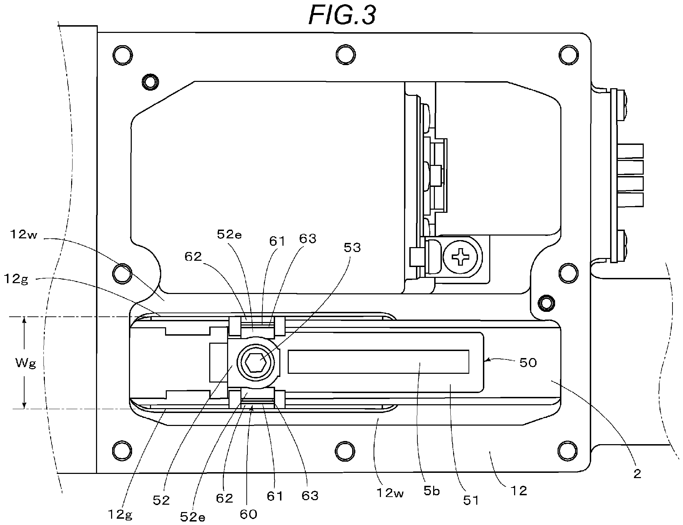

Meanwhile, a pair of upright wall portions 12w and 12w is formed in the casing 12 so as to be in parallel with an axis of the rod 2 (inserted through the casing 12), and as illustrated in Fig. 3, the support portion 52 of the magnet block 50 is fitted between groove portions 12g and 12g formed in the upright wall portions 12w and 12w, and the support portion 52 is fixed to the rod 2. Thus, the rod 2 is supported by the magnet block 50 so as to be prevented from being rotated with respect to the upright wall portions 12w and 12w and the casing 12. In this case, a load, which needs to withstand rotational force of the rod 2, is concentrated on the support portion 52, and as a result, it is possible to prevent a large load from being applied to the holding portion 51, and, the permanent magnet 5b, and it is possible to maintain accurate detection precision.

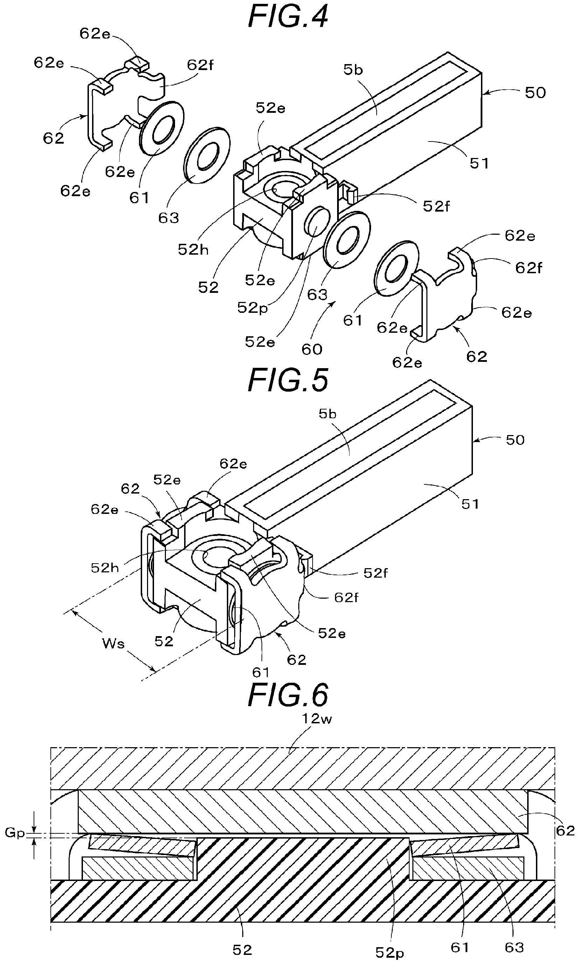

A biasing mechanism 60, which biases the pair of upright wall portions 12w and 12w and the support portion 52 of the magnet block 50 in a direction in which an interval between the pair of upright wall portions 12w and 12w and the support portion 52 of the magnet block 50 is increased, is interposed between the pair of upright wall portions 12w and 12w and the support portion 52 of the magnet block 50. The biasing mechanism 60 of the present embodiment has disc springs 61 which are biasing members held on the support portion 52, and a pair of sliding members 62 and 62 which is interposed between the disc springs 61 and the upright wall portions 12w and 12w and disposed to be in press contact with wall surfaces of the upright wall portions 12w and 12w by the disc springs 61, and the disc springs 61 and washers 63 are interposed between the sliding members 62 and the support portion 52. As illustrated in an enlarged view in Fig. 4, the support portion 52 has cylindrical projections 52p (illustrated only at one side in Fig. 4) formed to protrude from both sides facing the pair of upright wall portions 12w and 12w, and the disc springs 61 are disposed to be engaged with the projections 52p. In addition, a pair of extending portions 52e and 52e is formed on the support portion 52 so as to be in parallel with the upright wall portion 12w, and claw portions 52f are formed to extend from the support portion 52. Further, each of the sliding members 62 has a pair of claw portions 62e and 62e at both end portions of the sliding member 62, and has an extending portion 62f at one end portion of the sliding member 62, and the sliding member 62 is disposed such that the extending portion 62f is locked by the claw portion 52f of the support portion 52, and the pair of claw portions 62e and 62e is locked by both sides of the extending portions 52e, such that a displacement of the sliding member 62 with respect to the magnet block 50 may be prevented. Further, the biasing member of the biasing mechanism 60 is not limited to the disc spring 61, and a coil spring or an elastic body such as rubber may be used.

Thus, the assembly illustrated in Fig. 5 is configured by assembling the biasing mechanism 60 to the magnet block 50, but a width (Ws) between outer surfaces of the pair of sliding members 62 and 62 is set to be greater than a width (Wg) between the groove portions 12g and 12g illustrated in Fig. 3, and the support portion 52 of the magnet block 50 is disposed between the groove portions 12g and 12g in a state in which the disc springs 61 are compressed and axial dimensions of the disc springs 61 are reduced. As a result, the support portion 52 is maintained between the groove portions 12g and 12g in a state in which the sliding members 62 and 62 are in press contact with wall surfaces of the groove portions 12g and 12g by biasing force (spring force) of the disc springs 61, and as a result, it is possible to assuredly prevent the rotation of the magnet block 50 (i.e., the rod 2) without causing rattling noise resulting from the rotation of the rod 2.

In the present embodiment, as illustrated in an enlarged view in Fig. 6, a predetermined gap (Gp) is formed between a tip surface of the projection 52p of the support portion 52 and an inner surface of the sliding member 62 at an initial position at which the claw portions 62e and 62e of the sliding member 62 are locked by the support portion 52 and the sliding member 62 is in press contact with the wall surface of the groove portion 12g (upright wall portion 12w). That is, usually, the support portion 52 is held between the groove portions 12g and 12g (upright wall portions 12w and 12w) in a state in which the sliding members 62 are in press contact with the wall surfaces of the groove portions 12g by biasing force of the disc springs 61, and as a result, a displacement of the rod 2 in a rotation direction does not occur and a rotation of the rod 2 is prevented in a case in which force in a rotation direction, which is applied to the rod 2, is smaller than biasing force of the disc springs 61. As the force in the rotation direction, which is applied to the rod 2, becomes larger than the biasing force of the disc springs 61, the disc springs 61 are compressed further than the state at the initial position, but when the gap (Gp) becomes zero, the sliding member 62 and the magnet block 50 have the same property as a rigid body, and a displacement of the rod 2 in the rotation direction does not occur any further. The resulting effect is more remarkable in the rear wheel steering apparatus, and this will be described below.

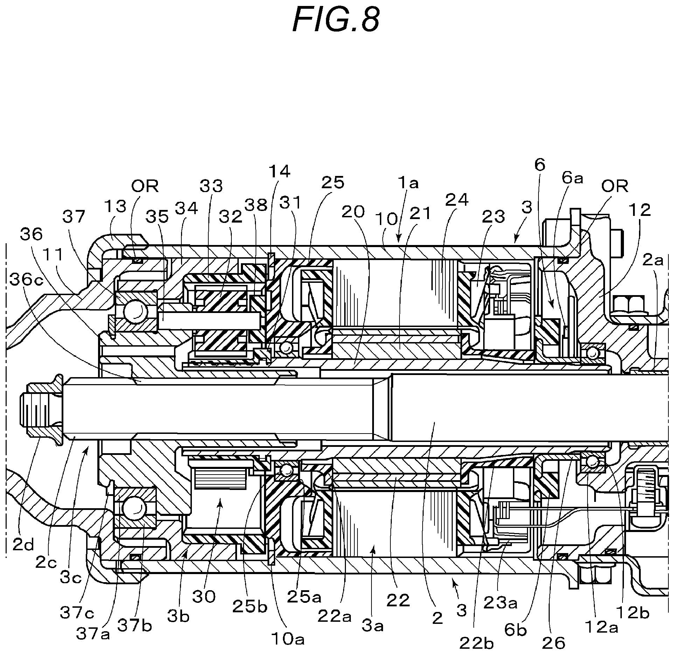

Next, an embodiment of the rear wheel steering apparatus having the displacement detection apparatus 5 configured as described above will be described with reference to Figs. 7 and 8. The rear wheel steering apparatus of the present embodiment constitutes a part of a four-wheel steering system (4WS), and a description of a front wheel steering apparatus will be omitted because the front wheel steering apparatus is identical to that in the related art. There are various types of suspension mechanisms for supporting the rear wheels of the vehicle, but the present embodiment is configured as indicated by an alternate long and two short dashes line in Fig. 7, an actuator unit AU, which constitutes the rear wheel steering apparatus of the present embodiment, is interposed between a support portion RS for a rear axle RA for supporting rear wheels RL and RR of the vehicle and a swing link LS which is pivotally supported on the rear axle RA and swings about a swing center C, and a portion between the support portion RS and the link LS is extended and contracted by the actuator unit AU, and the rear wheels RL and RR are steered through tie rods TR and TR in response to the swinging of the link LS.

The actuator unit AU is configured such that the rod 2 is axially movably (rectilinear motion) supported on a housing 1, one end portion of the rod 2 is connected to the link LS through a ball joint JL, the housing 1 is connected to the support portion RS through a ball joint JA, the rod 2 is operated by an actuator 3, and a portion between the support portion RS of the rear axle RA and the link LS is extended and contracted. Specifically, an electric motor 3a, which constitutes the actuator 3, is controlled by a controller 4, rotational output of the electric motor 3a is decelerated by a speed reduction mechanism 3b, and then the rotational output is converted into the rectilinear motion of the rod 2 through the linear motion mechanism 3c. Further, in the present embodiment, the electric motor 3a is configured as a brushless motor.

In the present embodiment, the housing 1 is broadly classified into a housing 1a for mainly accommodating components (electric motor 3a and the like) of the actuator 3 and a housing 1 b for mainly accommodating components (electronic circuit board 40 and the like) of the controller 4, a connecting cover 11 is joined to a cylindrical body 10 that constitutes the housing 1a, the casing 12, which constitutes the housing 1 b and has an opening opened downward and axially, is joined to the housing 1 a, and a lid body 15 is joined to the opening of the casing 12.

The actuator 3 is configured as illustrated in an enlarged view in Fig. 8, and fixed by being press-fitted into the cylindrical body 10 in a state in which a coil 23 is wound around a stator 24. An output shaft of the electric motor 3a is configured as a hollow rotary shaft 20, and the hollow rotary shaft 20 is supported by bearings 25b and 12b so as to be rotatable with respect to an inner diameter portion 25a of an annular motor cover 25 inserted into the cylindrical body 10 and an annular groove 12a formed in the casing 12. A core 21, which constitutes a rotor of the electric motor 3a, is fixed and press-fitted to an axial intermediate portion of the hollow rotary shaft 20, and permanent magnets 22 are uniformly disposed in a circumferential direction of the core 21.

The rod 2 is coaxially disposed in the hollow rotary shaft 20, supported to be axially movable (rectilinear motion) with respect to the housing 1, and supported to be prevented from being rotated with respect to the housing 1. Further, bushings 2a and 2b are interposed between the rod 2 and a support portion of the casing 12, and the bushings 2a and 2b serve to reduce sliding resistance to allow the rod 2 to smoothly move in the axial direction. That is, since the present embodiment is an extension and contraction mechanism with cantilevered supporting thereof, the bushings 2a and 2b do not require to function as a bearing for an axial movement mechanism with both ends supporting.

The speed reduction mechanism 3b of the present embodiment is configured as a planetary gear mechanism 30, a sun gear 31, which is an external gear, is integrally coupled to the hollow rotary shaft 20, and rotatably supported together with the hollow rotary shaft 20. A ring gear 33, which is an internal gear, is fixed to a holder 34, a planetary gear 32, which is an external gear, is meshed with the sun gear 31 and the ring gear 33 and disposed to be rotated about the sun gear 31. Further, as a carrier for supporting the planetary gear 32 through a pin 35 so that the planetary gear 32 is rotatable, the nut member 36 is supported by a bearing 37 so as to be rotatable with respect to the holder 34. The bearing 37 is a ball bearing, an inner race 37a of the bearing 37 is fitted to the nut member 36, an outer race 37b of the bearing 37 is fitted to the holder 34, and the bearing 37 is held in the nut member 36 by a C-shaped spacer 37c.

In the present embodiment, the holder 34 and the pin 35 are made of metal (e.g., iron), but the sun gear 31, the planetary gear 32, and the ring gear 33 are made of synthetic resin, and the sun gear 31 is molded integrally with the hollow rotary shaft 20 made of metal. Further, the ring gear 33 is supported to be non-rotatable with respect to the holder 34, and the holder 34 is supported to be non-rotatable with respect to the cylindrical body 10. That is, as illustrated in Fig. 8, a snap ring 14 is held in an annular groove 10a formed in the cylindrical body 10, and an annular lock nut 13 is screw-coupled to a threaded portion formed at an opening end at a side (left side in Fig. 8) of the speed reduction mechanism 3b of the cylindrical body 10 in a state in which the outer race 37b of the bearing 37 and the holder 34 are nipped between an annular side surface of the snap ring 14 and an annular opening end surface of the connecting cover 11, and the cylindrical body 10 and the connecting cover 11 are fastened. Thus, by axial pressing force generated by the screw-coupling of the lock nut 13, the outer race 37b of the bearing 37 and the holder 34 are rigidly nipped between the snap ring 14 and the connecting cover 11, and as a result, the holder 34 is held to be non-rotatable with respect to the cylindrical body 10.

An external threaded portion 2c having a trapezoidal thread along a predetermined axial length on an outer circumferential surface of one end portion of the rod 2 and an internal threaded portion 36c formed on an inner circumferential surface of the nut member 36 are disposed to be screw-coupled to each other, and the linear motion mechanism 3c is configured by the nut member 36 and the rod 2. Further, a nut 2d is screw-coupled to a tip of the external threaded portion 2c in order to prevent the rod 2 from being withdrawn. Since the rod 2 is supported as described above, an axial load, which may be applied to the rod 2, is absorbed by the cylindrical body 10 and the connecting cover 11 through the nut member 36, the bearing 37, the holder 34, and the snap ring 14.

Thus, in the actuator 3 of the present embodiment, when the hollow rotary shaft 20 is rotated by the electric motor 3a, the rotational output is decelerated by the speed reduction mechanism 3b of the planetary gear mechanism 30, such that the nut member 36 is rotated, and the rotational motion of the nut member 36 is converted into the rectilinear motion of the rod 2 by the linear motion mechanism 3c. As a result, as described above, the portion between the support portion RS of the rear axle RA and the link LS is extended and contracted, and a steering angle of the rear wheel is adjusted.

As illustrated in Fig. 2, as the controller 4, the electronic circuit board 40 which constitutes an electronic control apparatus (not illustrated), the displacement sensor 5a which constitutes the displacement detection apparatus 5, and the magnet block 50 are accommodated in the housing 1b. Further, as described above, the magnet block 50 serves to detect an axial displacement of the rod 2 when the rod 2 rectilinearly moves and to prevent a rotation of the rod 2. For example, output torque of the electric motor 3a is small when the steering operation is performed by adjusting a steering angle to a small degree when the vehicle travels at a middle or high speed, such that axial force (thrust) applied to the rod 2 is relatively small, and rotational torque of the rod 2 caused by rotational torque of the nut member 36 is also small. For this reason, in a case in which force for preventing the rotation of the rod 2 is smaller than the biasing force of the disc spring 61, a rotational displacement of the rod 2 does not occur and a rotation of the rod 2 is prevented without rotational rattling noise because the magnet block 50 is centered in the groove portions 12g and 12g of the casing 12 by the disc springs 61.

Meanwhile, when axial force (thrust) applied to the rod 2 is large, for example, when output torque of the electric motor 3a is large and large force for preventing the rotation of the rod 2 is applied when the steering operation is performed by adjusting a steering angle to a large degree when the vehicle travels at a low speed, the disc springs 61 are further compressed, but when the gap (Gp) illustrated in Fig. 6 becomes zero, the sliding member 62 and the magnet block 50 have the same property as a rigid body, and a displacement of the rod 2 in the rotation direction does not occur any further.

In particular, the displacement detection apparatus 5 is used as a means of the rear wheel steering apparatus which serves to detect an initial rear wheel steering angle when the vehicle starts up, but the initial rear wheel steering angle is detected in a state in which the vehicle is stopped, and the electric motor 3a generates no output. That is, there is no relative displacement between the displacement sensor 5a and the permanent magnet 5b in a state in which the magnet block 50 (permanent magnet 5b) is centered in the groove portions 12g and 12g of the casing 12 by the disc springs 61, and as a result, it is possible to detect the initial rear wheel steering angle with high precision.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. A displacement detection apparatus (5) for a linear motion mechanism (3c) having a nut member (36) and a rod (2) screw-coupled to the nut member to convert rotational motion of the nut member into rectilinear motion of the rod, the displacement detection apparatus being mounted in the linear motion mechanism to detect an axial displacement of the rod using a displacement sensor (5a), the displacement detection apparatus comprising:
a permanent magnet (5b) which is disposed to be in parallel with the rod and to face the displacement sensor;
a magnet block (50) which has a holding portion (51) that accommodates the permanent magnet, and a support portion (52) formed continuously and integrally with the holding portion and fixed to the rod;
a casing (12) which has a pair of upright wall portions (12w) parallel to an axis of the rod and accommodates the magnet block between the pair of upright wall portions; and
biasing mechanisms (60) which are respectively interposed between the pair of upright wall portions that constitutes the casing and the support portion of the magnet block, and bias the pair of upright wall portions and the support portion in a direction in which intervals between the pair of upright wall portions and the support portion are widened.

2. The displacement detection apparatus according to claim 1, wherein the biasing mechanisms include:
biasing members (61) which are held on the support portion of the magnet block; and
sliding members (62) which are respectively interposed between the biasing members and the pair of upright wall portions and disposed to be in press contact with wall surfaces of the pair of upright wall portions by the biasing members.

3. The displacement detection apparatus according to claim 2,
wherein the support portion of the magnet block has projections (52p) at both sides facing the pair of upright wall portions,
the biasing members have disc springs fitted to the projections, respectively,
the sliding members have claw portions (62e) locked by the support portion,
the claw portions are locked by the support portion, and
a predetermined gap (Gp) is formed between the sliding members and tip surfaces of the projections at an initial position at which the sliding members are in press contact with the wall surfaces of the upright wall portions by biasing force of the disc springs.

4. The displacement detection apparatus according to any one of claims 1 to 3,
wherein the rod has a long groove (2r) which is long in an axial direction, and a mounting hole (2h) which is opened in the long groove, and
the support portion of the magnet block has a through hole (52h) formed coaxially with the mounting hole of the rod, and a bolt (53) is inserted through the through hole and screw-coupled to the mounting hole such that the support portion is fixed to the rod.

5. A rear wheel steering apparatus for a vehicle, comprising:
a housing (1) which is connected to suspension mechanisms configured to support rear wheels (RL) of a vehicle, via a first connecting member and a second connecting member;
an electric motor (3a) which is accommodated in a cylindrical body (10) that constitutes the housing;
a speed reduction mechanism (3b) which is accommodated in the cylindrical body and decelerates output of the electric motor;
a linear motion mechanism (3c) which has a nut member (36) connected to the speed reduction mechanism to be rotated, and a rod (2) that is screw-coupled to the nut member and connected to the second connecting member to convert rotational motion of the nut member into rectilinear motion of the rod;
a displacement sensor (5a) which is mounted in the linear motion mechanism to detect an axial displacement of the rod;
a permanent magnet (5b) which is disposed to be in parallel with the rod and to face the displacement sensor;
a magnet block (50) which has a holding portion (51) that accommodates the permanent magnet, and a support portion (52) formed continuously and integrally with the holding portion and fixed to the rod;
a casing (12) which constitutes the housing together with the cylindrical body, has a pair of upright wall portions (12w) parallel to an axis of the rod, and accommodates the magnet block between the pair of upright wall portions; and
biasing mechanisms (60) which are respectively interposed between the pair of upright wall portions that constitutes the casing and the support portion of the magnet block and biases the pair of upright wall portions and the support portion in a direction in which intervals between the pair of upright wall portions and the support portion are widened.

6. The rear wheel steering apparatus according to claim 5,
wherein the biasing mechanisms include:
biasing members (61) which are held on the support portion of the magnet block; and
sliding members (62) which are respectively interposed between the biasing members and the pair of upright wall portions and disposed to be in press contact with wall surfaces of the pair of upright wall portions by the biasing members.

7. The rear wheel steering apparatus according to claim 6,
wherein the support portion of the magnet block has projections (52p) at both sides facing the pair of upright wall portions,
the biasing members have disc springs fitted to the projections, respectively,
the sliding members have claw portions (62e) locked by the support portion,
the claw portions are locked by the support portion, and
a predetermined gap (Gp) is formed between the sliding member and a tip surface of the projection at an initial position at which the sliding members are in press contact with the wall surfaces of the upright wall portions by biasing force of the disc springs.

8. The rear wheel steering apparatus according to any one of claims 5 to 7,
wherein the rod has a long groove (2r) which is long in an axial direction, and has a mounting hole (2h) which is opened in the long groove, and
the support portion of the magnet block has a through hole (52h) formed coaxially with the mounting hole of the rod, and
a bolt (53) is inserted through the through hole and screw-coupled to the mounting hole such that the support portion is fixed to the rod.
